# EUROPÄISCHE PATENTSCHRIFT

(11) **EP 4 047 440 B1**
(45) Veröffentlichungstag und Bekanntmachung des Hinweises auf die Patenterteilung: **03.04.2024**
(21) Anmeldenummer: 21158795.1
(22) Anmeldetag: 23.02.2021
(51) Int. Cl.: G05D 1/02

(54) **VERFAHREN ZUM BETREIBEN EINES AUTONOMEN MOBILEN GRÜNFLÄCHENBEARBEITUNGSROBOTERS UND GRÜNFLÄCHENBEARBEITUNGSSYSTEM**
METHOD FOR OPERATING AN AUTONOMOUS MOBILE MOWER ROBOT AND MOWING SYSTEM
PROCÉDÉ DE FONCTIONNEMENT D'UN ROBOT MOBILE AUTONOME DE TRAITEMENT DES ESPACES VERTS ET SYSTÈME DE TRAITEMENT DES ESPACES VERTS

(43) Veröffentlichungstag der Anmeldung: 24.08.2022
(73) Patentinhaber: Andreas Stihl AG & Co. KG, 71336 Waiblingen (DE)
(72) Erfinder: Strohmaier, Andreas, 71554 Weissach (DE); Daubermann, Julian, 70376 Stuttgart (DE)
(74) Vertreter: Patentanwälte Ruff, Wilhelm, Beier, Dauster & Partner mbB

(56) Entgegenhaltungen:
- WO-A1-2019/241923
- CN-A- 111 328 558
- FACKELMEIER A ET AL: "A multistatic radar array for detecting wild animals during pasture mowing", RADAR CONFERENCE, 2009. EURAD 2009. EUROPEAN, IEEE, PISCATAWAY, NJ, USA, 30. September 2009 (2009-09-30), Seiten 477-480, XP031558431, ISBN: 978-1-4244-4747-3

## Beschreibung

### ANWENDUNGSGEBIET UND STAND DER TECHNIK

Die Erfindung bezieht sich auf ein Verfahren zum Betreiben eines autonomen mobilen Grünflächenbearbeitungsroboters und ein Grünflächenbearbeitungssystem aufweisend einen autonomen mobilen Grünflächenbearbeitungsroboter.

Die CN 111 328 558 A offenbart eine Mähvorrichtung und ein Steuerungsverfahren davon. Die Mähvorrichtung wird gestoppt, wenn ein Erfassungssignal für einen lebenden Körper empfangen wird. Wenn kein Erfassungssignal für einen lebenden Körper empfangen wird, wird die Mäheinrichtung so gesteuert, dass sie Hindernisse vermeidet oder entsprechend eines Kontakterfassungssignals arbeitet.

Die WO 2019/241923 A1 offenbart einen unbemannten Rasenmäher, welcher einen Mähkörper, ein Schneidmodul, ein Radmodul, ein Kameramodul und eine CPU umfasst. Das Schneidemodul ist an dem Mähkörper montiert und zum Jäten konfiguriert. Das Radmodul ist an dem Mähkörper montiert und so konfiguriert, dass es den Mähkörper bewegt. Das Kameramodul ist an dem Mähkörper montiert und so konfiguriert, dass es Bilder von der Umgebung des Mähkörpers aufnimmt. Die CPU ist mit dem Schneidmodul, dem Radmodul und dem Kameramodul gekoppelt. Die CPU steuert das Schneidmodul und das Radmodul, um innerhalb eines Bereichs gemäß den vom Kameramodul aufgenommenen Bildern und Steuersignalen von einer tragbaren elektronischen Vorrichtung zu jäten, oder die CPU steuert das Schneidmodul und das Radmodul, um innerhalb eines Bereichs gemäß den vom Kameramodul aufgenommenen Bildern zu jäten.

Die Veröffentlichung "A multistatic radar array for detecting wild animals during pasture mowing" von Fackelmeier et al. offenbart eine Detektionsmethode, die auf Mikrowellensignalen basiert. Dieses inkohärente Radarsystem verwendet als Matrix angeordnete Antennen und ein Signalüberlagerungsprinzip. Es detektiert die Reflexionssignatur von verdeckten Zielen einer bestimmten Form - z.B. Metalle oder Objekte mit hohem Wassergehalt. Durch die geringe benötigte Rechenleistung kann ein großes Gebiet in kurzer Zeit gescannt werden. Da dieses Radarsystem fast völlig unempfindlich gegenüber vertikalen Bewegungen des Auslegers ist, kann es auf einem schnell fahrenden Fahrzeug montiert werden.

### AUFGABE UND LÖSUNG

Der Erfindung liegt als Aufgabe die Bereitstellung eines Verfahrens zum Betreiben eines autonomen mobilen Grünflächenbearbeitungsroboters und eines Grünflächenbearbeitungssystems aufweisend einen autonomen mobilen Grünflächenbearbeitungsroboter zugrunde, das jeweils verbesserte Eigenschaften aufweist.

Die Erfindung löst diese Aufgabe durch die Bereitstellung eines Verfahrens mit den Merkmalen des Anspruchs 1 und eines Grünflächenbearbeitungssystems mit den Merkmalen des Anspruchs 13. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Betreiben eines autonomen mobilen, insbesondere elektrischen und/oder steuerbaren, Grünflächenbearbeitungsroboters ausgebildet bzw. konfiguriert bzw. vorgesehen. Das Verfahren umfasst bzw. weist die Schritte auf: a) Senden, insbesondere automatisches und/oder wiederholtes und/oder kontinuierliches Senden und/oder Aussenden, von Radiowellen mittels des Grünflächenbearbeitungsroboters. b) Empfangen, insbesondere automatisches und/oder wiederholtes und/oder kontinuierliches Empfangen, von, insbesondere den gesendeten und, reflektierten Radiowellen mittels des Grünflächenbearbeitungsroboters. c) Auswerten, insbesondere automatisches und/oder wiederholtes und/oder kontinuierliches Auswerten, bzw. Analysieren, insbesondere mindestens, der reflektierten, insbesondere und empfangenen, Radiowellen zum, insbesondere automatischen und/oder wiederholten und/oder kontinuierlichen, Erkennen mindestens eines lebendigen Tiers und/oder mindestens eines lebendigen Menschen unter Berücksichtigung, insbesondere Kompensation, eines Bewegens des Grünflächenbearbeitungsroboters auf einer, insbesondere mittels des Grünflächenbearbeitungsroboters, zu bearbeitenden Fläche. d) Steuern, insbesondere automatisches und/oder wiederholtes und/oder kontinuierliches Steuern, des Grünflächenbearbeitungsroboters in Abhängigkeit, insbesondere mindestens, der, insbesondere ausgewerteten, Erkennung und/oder einer Nicht-Erkennung und/oder der Auswertung.

Dies, insbesondere das Senden und das Empfangen mittels des Grünflächenbearbeitungsroboters, ermöglicht das Senden und das Empfangen an einer Stelle, wo es relevant bzw. wo etwas Relevantes sein kann.

Zusätzlich oder alternativ ermöglicht dies, insbesondere das Steuern in Abhängigkeit der Erkennung, ein Risiko einer Störung, insbesondere einer Schädigung, des lebendigen Tiers und/oder des lebendigen Menschen durch den Grünflächenbearbeitungsroboter zu vermindern.

Somit ermöglicht dies das Betreiben des Grünflächenbearbeitungsroboters.

Insbesondere kann der Grünflächenbearbeitungsroboter zum autonomen Bearbeiten der Fläche ausgebildet bzw. konfiguriert sein, insbesondere ein Bearbeitungswerkzeug aufweisen bzw. umfassen.

Insbesondere kann autonom Bearbeiten bedeuten, dass sich der Grünflächenbearbeitungsroboter auf der Fläche selbstständig, selbsttätig, selbstbestimmt, selbstgesteuert und/oder unabhängig von einem, insbesondere menschlichen, Benutzer bewegen und/oder agieren und/oder zumindest einen Parameter, wie insbesondere einen Streckenparameter, und/oder einen Umkehrpunkt auswählen kann. Zusätzlich oder alternativ kann autonom Bearbeiten bedeuten, dass der Grünflächenbearbeitungsroboter selbstständig mit einem Bearbeiten beginnen und/oder das Bearbeiten beenden kann. Weiter zusätzlich oder alternativ braucht oder kann beim autonomen Bearbeiten der Grünflächenbearbeitungsroboter nicht durch den Benutzer gesteuert zu sein, insbesondere nicht ferngesteuert. In anderen Worten: bei dem autonomen Bearbeiten kann der Grünflächenbearbeitungsroboter insbesondere ohne menschliche Steuerung und/oder Führung arbeiten. Weiter zusätzlich oder alternativ kann der Grünflächenbearbeitungsroboter als Serviceroboter und/oder Dienstleistungsroboter bezeichnet werden.

Die Fläche kann beispielsweise eine Freifläche, insbesondere ein unversiegelter Boden, oder eine Grünfläche sein, wie eine Wiese mit Rasen.

Der Schritt a) kann aufweisen bzw. umfassen: Senden eines Signals, insbesondere eines Primärsignals, in Form von den, insbesondere gebündelten, Radiowellen und/oder eines Pulses der Radiowellen.

Der Schritt b) kann aufweisen bzw. umfassen: Empfangen eines Signals, insbesondere eines Sekundärsignals, in Form von den, insbesondere gesendeten und/oder gebündelten und, reflektierten Radiowellen und/oder eines Pulses der, insbesondere gesendeten und, reflektierten Radiowellen, insbesondere des, insbesondere gesendeten und, reflektierten Primärsignals.

Die Radiowellen können Radarwellen aufweisen, insbesondere sein.

Die, insbesondere gesendeten, Radiowellen können von einem Objekt, insbesondere dem Tier und/oder dem Menschen, insbesondere zu dem Grünflächenbearbeitungsroboter zurück, reflektiert sein oder werden.

Falls das lebendige Tier und/oder der lebendige Mensch vorhanden sein können/kann, kann das Auswerten das Erkennen bzw. die Erkennung des lebendigen Tiers und/oder des lebendigen Menschen ermöglichen. Zusätzlich oder alternativ andernfalls bzw. falls das lebendige Tier und/oder der lebendige Mensch nicht vorhanden sein können und/oder das Tier und/oder der Mensch nicht-lebendig bzw. tot sein können, braucht oder kann das Auswerten nicht das bzw. kein Erkennen bzw. nicht die bzw. keine Erkennung des Tiers und/oder des Menschen ermöglichen.

Im Übrigen wird auf die Fachliteratur verwiesen.

Das Steuern kann in Abhängigkeit von der Erkennung verschieden von dem Steuern in Abhängigkeit der Nicht-Erkennung sein.

Der Schritt a) kann, insbesondere mehrfach, wiederholt und/oder kontinuierlich ausgeführt werden.

Der Schritt b) kann zeitlich nach dem Schritt a) ausgeführt und/oder, insbesondere mehrfach, wiederholt und/oder kontinuierlich ausgeführt werden.

Der Schritt c) kann zeitlich nach dem Schritt b) ausgeführt und/oder, insbesondere mehrfach, wiederholt und/oder kontinuierlich ausgeführt werden.

Der Schritt d) kann zeitlich nach dem Schritt c) ausgeführt und/oder, insbesondere mehrfach, wiederholt und/oder kontinuierlich ausgeführt werden.

Dies, insbesondere das Auswerten der reflektierten Radiowellen unter Berücksichtigung des Bewegens des Grünflächenbearbeitungsroboters auf der zu bearbeitenden Fläche, ermöglicht das Erkennen des Tiers und/oder des Menschen, insbesondere trotz des Bewegens. Insbesondere kann das Bewegen des Grünflächenbearbeitungsroboters mittels Odometrie, inertialer Messung (IMU), insbesondere Beschleunigungserfassung und/oder Drehratenerfassung, und/oder globaler und/oder lokaler Positionsbestimmung berücksichtigt sein oder werden.

In einer Weiterbildung der Erfindung umfasst bzw. weist der Schritt c) auf: Auswerten mittels, insbesondere automatischen, Vergleichens der reflektierten, insbesondere und empfangenen, Radiowellen mit den gesendeten Radiowellen. Dies ermöglicht ein Gewinnen bzw. eine Gewinnung von mindestens einer Information für das Erkennen bzw. die Erkennung. Insbesondere kann mindestens ein Teil der gesendeten Radiowellen als Referenzwellen bezeichnet werden. Im Übrigen wird auf die Fachliteratur verwiesen.

Insbesondere können die Radiowellen eine Frequenz bis 120 GHz (Gigahertz), insbesondere bis 60 GHz, insbesondere bis 24,5, GHz, aufweisen bzw. haben.

In einer Weiterbildung der Erfindung haben bzw. weisen die, insbesondere gesendeten und/oder reflektierten, Radiowellen eine Frequenz zum Eindringen in einen Körper eines, insbesondere des, Tiers und/oder eines, insbesondere des, Menschen, insbesondere in einem Eindring-Bereich von 500 MHz (Megahertz) bis 6 GHz, auf. Dies ermöglicht ein besonders gutes Erkennen, insbesondere einer Herzschlagbewegung und/oder einer Atembewegung, des lebendigen Tiers und/oder des lebendigen Menschen. Insbesondere kann die Frequenz in einem Band, insbesondere von 100 MHz, um 1,3 GHz oder 2,45 GHz sein. Im Übrigen wird auf die Fachliteratur verwiesen.

In einer Weiterbildung der Erfindung umfasst bzw. weist der Schritt c) auf: Auswerten bzw. Analysieren, insbesondere mindestens, der reflektierten, insbesondere und empfangenen, Radiowellen nach einem Herzschlagbewegungs- und/oder Atembewegungs-Kriterium. Insbesondere ist das Herzschlagbewegungs- und/oder Atembewegungs-Kriterium für eine, insbesondere die, Herzschlagbewegung und/oder eine, insbesondere die, Atembewegung eines, insbesondere des, Tiers und/oder eines, insbesondere des, Menschen charakteristisch bzw. kennzeichnend. Dies ermöglicht das Erkennen des lebendigen Tiers und/oder des lebendigen Menschen und/oder das Nicht-Erkennen des nicht-lebendigen bzw. toten Tiers und/oder des nicht-lebendigen bzw. toten Menschen und/oder eines Gegenstands bzw. eine Unterscheidung dazwischen. Insbesondere falls das Herzschlagbewegungs- und/oder Atembewegungs-Kriterium erfüllt sein kann, kann das Auswerten das Erkennen bzw. die Erkennung des lebendigen Tiers und/oder des lebendigen Menschen ermöglichen bzw. das lebendige Tier und/oder der lebendige Mensch können/kann erkannt werden. Zusätzlich oder alternativ andernfalls bzw. falls das Herzschlagbewegungs- und/oder Atembewegungs-Kriterium nicht erfüllt sein kann, braucht oder kann das Auswerten nicht das bzw. kein Erkennen bzw. nicht die bzw. keine Erkennung des Tiers und/oder des Menschen ermöglichen bzw. brauchen/braucht oder können/kann nicht das bzw. kein Tier und/oder nicht der bzw. kein Mensch erkannt werden.

In einer Ausgestaltung der Erfindung ist das Herzschlag- und/oder Atembewegungs-Kriterium, dass, insbesondere mindestens, die reflektierten, insbesondere und empfangenen, Radiowellen, insbesondere eine Doppler-Verschiebung, insbesondere eine Doppler-Frequenz-Verschiebung, oder eine auf der Doppler-Verschiebung basierende Größe, eine, insbesondere periodische, Änderung bzw. Variation mit einer Frequenz in einem Herzschlagbewegungs- und/oder Atembewegungs-Bereich, insbesondere von 10 mHz (Millihertz), insbesondere von 100 mHz, insbesondere von 200 mHz, bis 20 Hz (Hertz), insbesondere bis 10 Hz, insbesondere bis 5 Hz, aufweisen bzw. haben. Dies, insbesondere das Erkennen bzw. die Erkennung der Änderung mit der Frequenz, welche bei einer, insbesondere der, Herzschlagbewegung und/oder einer, insbesondere der, Atembewegung vorkommen, ermöglicht das Erkennen bzw. die Erkennung des lebendigen Tiers und/oder des lebendigen Menschen. Insbesondere können die, insbesondere gesendeten, Radiowellen von mindestens einem Teil eines schlagenden bzw. sich bewegenden Herzes und/oder einer sich bewegenden Lunge des Tiers und/oder des Menschen reflektiert sein oder werden. Zusätzlich oder alternativ können die Radiowellen kontinuierlich bzw. dauerhaft gesendet werden bzw. die Radiowellen können Dauerstrichradarwellen sein und/oder mehrere Pulse der Radiowellen können gesendet werden. Weiter zusätzlich oder alternativ kann die Doppler-Verschiebung zwischen den gesendeten Radiowellen bzw. dem Primärsignal und den reflektierten, insbesondere und empfangenen, Radiowellen bzw. dem Sekundärsignal sein, insbesondere eine Frequenzänderung. Weiter zusätzlich oder alternativ kann die Herzschlagbewegung und/oder die Atembewegung die Doppler-Verschiebung der reflektierten Radiowellen verursachen. Weiter zusätzlich oder alternativ kann das Auswerten mittels eines Analysierens, insbesondere mittels einer schnellen Fourier-Transformation (FFT), eines, insbesondere gesamten, Doppler-Frequenzspektrums sein. Weiter zusätzlich kann die Änderung mit der Frequenz eine Mindestamplitude aufweisen bzw. haben. Im Übrigen wird auf die Fachliteratur verwiesen.

Insbesondere kann der Grünflächenbearbeitungsroboter zeitlich mit dem Senden und/oder dem Empfangen der Radiowellen auf einer, insbesondere der, Fläche angehalten bzw. nicht-bewegt sein oder werden.

Erfindungsgemäß umfasst bzw. weist der Schritt c) auf: Auswerten der reflektierten Radiowellen unter Berücksichtigung, insbesondere Kompensation, des Bewegens des Grünflächenbearbeitungsroboters auf der zu bearbeitenden Fläche. Zusätzlich oder alternativ kann das Bewegen, insbesondere des Grünflächenbearbeitungsroboters, zeitlich mit dem Senden und/oder dem Empfangen der Radiowellen die Doppler-Verschiebung oder die Größe, insbesondere in Form einer Verschiebung bzw. eines Offsets, beeinflussen. Weiter zusätzlich oder alternativ kann der Schritt c) aufweisen bzw. umfassen: Auswerten, insbesondere mindestens, der reflektierten, insbesondere und empfangenen, Radiowellen, insbesondere der Doppler-Verschiebung oder der Größe, unter Berücksichtigung, insbesondere Kompensation, eines Bewegens des Tiers und/oder des Menschen. Weiter zusätzlich oder alternativ kann das Bewegen des Grünflächenbearbeitungsroboters und/oder des Tiers und/oder des Menschen mittels Auswertens einer Zeitverschiebung zwischen dem Senden und dem Empfangen von, insbesondere den, Radiowellen, wie nachfolgend genannt, und/oder mittels Radiowellen mit einer, insbesondere verschiedenen, Frequenz, insbesondere nicht zum Eindringen in einen Körper des Tiers und/oder des Menschen, insbesondere in einem Nicht-Eindring-Bereich von 20 GHz bis 120 Ghz, insbesondere in einem Band, insbesondere von 250 MHz, um 24,5 GHz oder 60 Ghz, berücksichtigt sein oder werden. Im Übrigen wird auf die Fachliteratur verwiesen.

In einer Weiterbildung der Erfindung umfasst bzw. weist der Schritt a) auf: Senden der Radiowellen mit einer Sendeleistung bzw. HF-Leistung von maximal 2 mW (Milliwatt), insbesondere von maximal 1 mW. Dies ermöglicht einen, insbesondere negativen Einfluss, der Radiowellen, insbesondere beim Eindringen in den Körper, auf das Tier und/oder den Menschen zu vermindern oder sogar zu vermeiden. Insbesondere kann diese Sendeleistung aufgrund des Sendens und/oder des Empfangens der Radiowellen mittels des Grünflächenbearbeitungsroboters ausreichend sein. Zusätzlich oder alternativ kann die Sendeleistung minimal größer 0 mW sein.

In einer Weiterbildung, insbesondere einer Ausgestaltung, der Erfindung umfasst bzw. weist der Schritt c) auf: Auswerten, insbesondere mindestens, der reflektierten, insbesondere und empfangenen, Radiowellen, insbesondere einer, insbesondere der, Zeitverschiebung, insbesondere eines Werts der Zeitverschiebung und/oder einer Laufzeit, zwischen dem Senden, insbesondere des Pulses, der Radiowellen und dem Empfangen, insbesondere des Pulses, der Radiowellen, zum, insbesondere automatischen und/oder wiederholten und/oder kontinuierlichen, Bestimmen, insbesondere mindestens, einer Entfernung, insbesondere eines Werts der Entfernung, bzw. eines Abstands zu, insbesondere mindestens, einem die gesendeten Radiowellen reflektierenden Objekt, insbesondere dem, insbesondere zu erkennenden und/oder erkannten, Tier und/oder dem, insbesondere zu erkennenden und/oder erkannten, Menschen.

Der Schritt d) umfasst bzw. weist auf: Steuern des Grünflächenbearbeitungsroboters in Abhängigkeit, insbesondere mindestens, der, insbesondere ausgewerteten, Entfernung, insbesondere mittels, insbesondere logischen, Verknüpfens mit der Erkennung. Dies ermöglicht, dass das Steuern in Abhängigkeit einer kleinen Entfernung, insbesondere und somit eines großen Risikos einer Störung des lebendigen Tiers und/oder des lebendigen Menschen durch den Grünflächenbearbeitungsroboter, verschieden von dem Steuern in Abhängigkeit einer großen Entfernung, insbesondere und somit eines kleinen Risikos einer Störung des lebendigen Tiers und/oder des lebendigen Menschen durch den Grünflächenbearbeitungsroboter, sein kann. Insbesondere können die Radiowellen eine, insbesondere verschiedene, Frequenz, insbesondere nicht zum Eindringen in einen Körper des Tiers und/oder des Menschen, insbesondere in einem Nicht-Eindring-Bereich von 20 GHz bis 120 Ghz, insbesondere in einem Band, insbesondere von 250 MHz, um 24,5 GHz oder 60 GHz, aufweisen bzw. haben. Im Übrigen wird auf die Fachliteratur verwiesen.

In einer Weiterbildung, insbesondere einer Ausgestaltung, der Erfindung umfasst bzw. weist das Verfahren auf: Scannen, insbesondere automatisches und/oder wiederholtes und/oder kontinuierliches Scannen, bzw. Abtasten einer Umgebung des Grünflächenbearbeitungsroboters mittels gerichteten, insbesondere automatischen und/oder wiederholten und/oder kontinuierlichen, Sendens von gebündelten Radiowellen in dem Schritt a) und mittels Auswertens der reflektierten, insbesondere und empfangenen, Radiowellen zum Bestimmen, insbesondere mindestens, einer Richtung, insbesondere eines Werts der Richtung, bzw. eines Winkels zu, insbesondere mindestens, einem, insbesondere dem, die gesendeten Radiowellen reflektierenden Objekt, insbesondere dem, insbesondere zu erkennenden und/oder erkannten, Tier und/oder dem, insbesondere zu erkennenden und/oder erkannten, Menschen, in dem Schritt c). Der Schritt d) umfasst bzw. weist auf: Steuern des Grünflächenbearbeitungsroboters in Abhängigkeit, insbesondere mindestens, der, insbesondere ausgewerteten, Richtung, insbesondere mittels, insbesondere logischen, Verknüpfens mit der Erkennung und/oder der Entfernung. Dies ermöglicht eine Ortung des Objekts und/oder, insbesondere somit, ein Herumbewegen des Grünflächenbearbeitungsroboters um das Objekt herum. Insbesondere kann das Scannen ein Ändern einer Richtung des, insbesondere gerichteten, Sendens der gebündelten Radiowellen aufweisen, insbesondere mittels eines Drehens mindestens eines Teils des Grünflächenbearbeitungsroboters. Im Übrigen wird auf die Fachliteratur verwiesen.

In einer Ausgestaltung der Erfindung umfasst bzw. weist das Verfahren auf: Navigieren bzw. Bestimmen, insbesondere automatisches und/oder wiederholtes und/oder kontinuierliches Bestimmen, einer Position, insbesondere eines Werts der Position, des Grünflächenbearbeitungsroboters auf der zu bearbeitenden Fläche, insbesondere in Bezug auf einen Begrenzungsrand der Fläche, in Abhängigkeit der, insbesondere ausgewerteten, Entfernung und/oder der, insbesondere ausgewerteten, Richtung. Steuern, insbesondere automatisches und/oder wiederholtes und/oder kontinuierliches Steuern, des Bewegens des Grünflächenbearbeitungsroboters auf der Fläche in Abhängigkeit der bestimmten Position, insbesondere derart, dass der Grünflächenbearbeitungsroboter auf der Fläche bleibt, insbesondere innerhalb des Begrenzungsrands. Dies ermöglicht ein Risiko einer Störung durch den Grünflächenbearbeitungsroboter außerhalb des Begrenzungsrands zu vermindern oder sogar zu vermeiden und/oder ein Herumbewegen des Grünflächenbearbeitungsroboters um das Objekt herum von dem Begrenzungsrand, insbesondere einem nächsten Abschnitt des Begrenzungsrands, weg und/oder das autonome Bearbeiten der Fläche. Insbesondere kann das Objekt einen Radiowellenreflektor, insbesondere als eine lokale Positionsbestimmungs-Station und/oder auf dem Begrenzungsrand, aufweisen, insbesondere sein. Zusätzlich oder alternativ kann das Steuern in Anhängigkeit von mindestens einer, insbesondere eingelernten und/oder gespeicherten bzw. hinterlegten Position, insbesondere einer Abfolge von Positionen, des Begrenzungsrands, insbesondere eines Vergleichens der bestimmten Position mit der mindestens einen Position des Begrenzungsrands, sein. Weiter zusätzlich oder alternativ kann der Begrenzungsrand durch ein Ende der Fläche, insbesondere einen versiegelten Boden, wie z.B. einen Weg und/oder eine Terrasse und/oder eine Ein-, Aus und/oder Durchfahrt und/oder einen Parkplatz, und/oder einen Steinboden, eine Wand, einen Zaun, eine Hecke, ein Beet und/oder anders definiert sein. Im Übrigen wird auf die Fachliteratur verwiesen.

In einer Weiterbildung der Erfindung umfasst bzw. weist der Grünflächenbearbeitungsroboter ein, insbesondere elektrisches und/oder steuerbares, Bewegungs-Antriebssystem, insbesondere ein Fahr-Antriebssystem, zum, insbesondere zu dem, Bewegen des Grünflächenbearbeitungsroboters auf der zu bearbeitenden Fläche auf. Der Schritt d) umfasst bzw. weist auf: Steuern des Bewegungs-Antriebssystems in Abhängigkeit der Erkennung, insbesondere zum Herumbewegen des Grünflächenbearbeitungsroboters um das erkannte Tier und/oder den erkannten Menschen herum.

Zusätzlich oder alternativ umfasst bzw. weist der Grünflächenbearbeitungsroboter ein bewegliches, insbesondere das bewegliche, Bearbeitungswerkzeug zum Bearbeiten der Fläche und ein, insbesondere elektrisches und/oder steuerbares, Werkzeug-Antriebssystem zum Bewegen des Bearbeitungswerkzeugs auf. Der Schritt d) umfasst bzw. weist auf: Steuern, insbesondere Deaktivieren bzw. Ausschalten, des Werkzeug-Antriebssystems in Abhängigkeit der Erkennung.

Dies ermöglicht eine Mindestentfernung zu dem Tier und/oder dem Menschen und/oder, insbesondere somit, das Risiko einer Störung klein zu halten oder sogar zu vermeiden. Insbesondere braucht oder kann das Steuern des Bewegungs-Antriebssystems in Abhängigkeit der Nicht-Erkennung nicht zum Herumbewegen des Grünflächenbearbeitungsroboters um ein, insbesondere das und/oder erkannte, Objekt, insbesondere einen Gegenstand, herum sein. Zusätzlich oder alternativ braucht oder kann das Steuern des Werkzeug-Antriebssystems in Abhängigkeit der Nicht-Erkennung nicht zum Deaktivieren des Werkzeug-Antriebssystems sein, insbesondere kann zum Aktivieren bzw. Einschalten des Werkzeug-Antriebssystems sein.

In einer Weiterbildung der Erfindung ist der Grünflächenbearbeitungsroboter als ein Rasenmähroboter, insbesondere mit einem Rasenmähwerkzeug, ausgebildet bzw. konfiguriert. Für einen derartigen Grünflächenbearbeitungsroboter kann das Verfahren besonders vorteilhaft sein. Insbesondere kann der Grünflächenbearbeitungsroboter als ein Mulchmähroboter ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann das Rasenmähwerkzeug als ein rotierendes Rasenmähwerkzeug und dazu ausgebildet sein, ein zu mähendes Gut im sogenannten Freischnittverfahren ohne Gegenschneide zu mähen.

Das erfindungsgemäße, insbesondere elektrische, Grünflächenbearbeitungssystem umfasst bzw. weist auf: einen, insbesondere den, autonomen mobilen Grünflächenbearbeitungsroboter, eine, insbesondere elektrische, Auswerteeinrichtung und eine, insbesondere elektrische, Steuereinrichtung. Der Grünflächenbearbeitungsroboter umfasst bzw. weist auf: eine, insbesondere elektrische, Sendeeinrichtung, insbesondere eine Aussendeeinrichtung, und eine, insbesondere elektrische, Empfangseinrichtung. Die Sendeeinrichtung, insbesondere eine Sendeantenne der Sendeeinrichtung, ist zum, insbesondere zu dem, Senden von, insbesondere den, Radiowellen ausgebildet bzw. konfiguriert. Die Empfangseinrichtung, insbesondere eine Empfangsantenne der Empfangseinrichtung, ist zum, insbesondere zu dem, Empfangen von, insbesondere den, reflektierten Radiowellen ausgebildet bzw. konfiguriert. Die Auswerteeinrichtung ist zum, insbesondere zu dem, Auswerten der reflektierten Radiowellen zum, insbesondere zu dem, Erkennen mindestens eines, insbesondere des, lebendigen Tiers und/oder mindestens eines, insbesondere des, lebendigen Menschen unter Berücksichtigung eines, insbesondere des, Bewegens des Grünflächenbearbeitungsroboters auf einer, insbesondere der, zu bearbeitenden Fläche ausgebildet bzw. konfiguriert. Die Steuereinrichtung ist zum, insbesondere zu dem, Steuern des Grünflächenbearbeitungsroboters in Abhängigkeit der Erkennung ausgebildet bzw. konfiguriert. Das Grünflächenbearbeitungssystem kann mindestens einen Teil oder sogar alle Vorteile wie vorhergehend für das Verfahren genannt ermöglichen. Insbesondere kann das Grünflächenbearbeitungssystem zum, insbesondere automatischen, Ausführen eines, insbesondere des, Verfahrens wie vorhergehend genannt ausgebildet bzw. konfiguriert sein. Zusätzlich oder alternativ kann der Grünflächenbearbeitungsroboter die Auswerteeinrichtung und/oder die Steuereinrichtung aufweisen bzw. umfassen. Weiter zusätzlich oder alternativ können die Auswerteeinrichtung und/oder die Steuereinrichtung eine Recheneinrichtung und/oder einen Mikrokontroller und/oder einen Computer aufweisen, insbesondere sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch ein erfindungsgemäßes Grünflächenbearbeitungssystem aufweisend einen autonomen mobilen Grünflächenbearbeitungsroboter und ein erfindungsgemäßes Verfahren zum Betreiben des autonomen mobilen Grünflächenbearbeitungsroboters,
- Fig. 2: schematisch einen zeitlichen Verlauf einer Doppler-Verschiebung ausgewertet mittels des Grünflächenbearbeitungssystems und des Verfahrens der Fig. 1,
- Fig. 3: schematisch ein Frequenzspektrum der Doppler-Verschiebung der Fig. 2 ausgewertet mittels des Grünflächenbearbeitungssystems und des Verfahrens der Fig. 1 bzw. eine Amplitude einer Änderung der Doppler-Verschiebung über einer Frequenz der Änderung, und
- Fig. 4: schematisch das Grünflächenbearbeitungssystem und das Verfahren der Fig. 1.

### DETAILLIERTE BESCHREIBUNG DER AUSFÜHRUNGSBEISPIELE

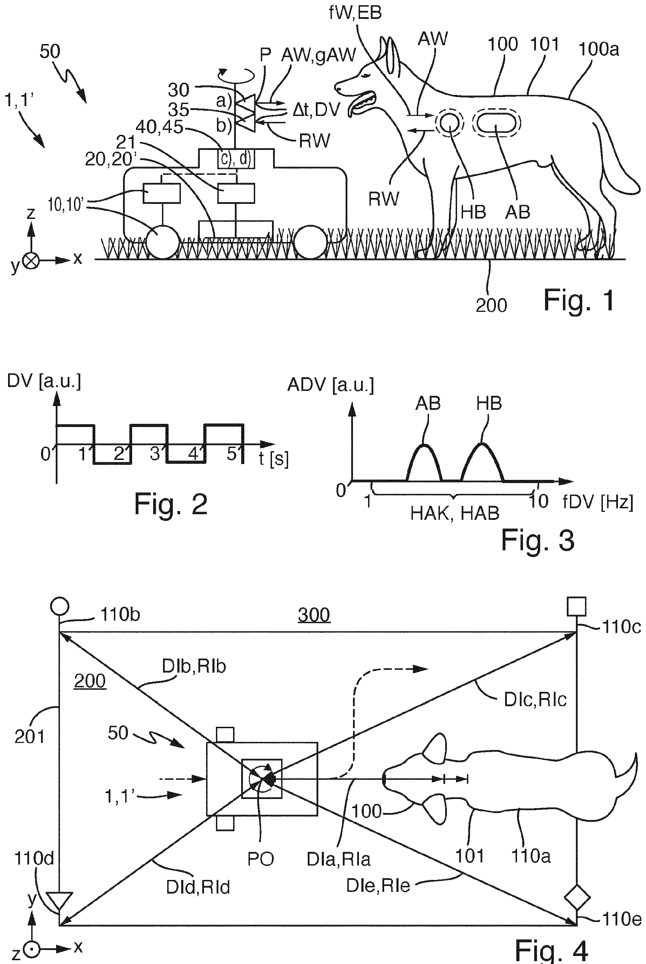

Fig. 1 und 4 zeigen ein erfindungsgemäßes Grünflächenbearbeitungssystem 50. Das Grünflächenbearbeitungssystem 50 weist auf: einen autonomen mobilen Grünflächenbearbeitungsroboter 1, eine Auswerteeinrichtung 40 und eine Steuereinrichtung 45. Der Grünflächenbearbeitungsroboter 1 weist auf: eine Sendeeinrichtung 30 und eine Empfangseinrichtung 35. Die Sendeeinrichtung 30 ist zum Senden von Radiowellen AW ausgebildet, insbesondere sendet. Die Empfangseinrichtung 35 ist zum Empfangen von, insbesondere den, reflektierten Radiowellen RW ausgebildet, insbesondere empfängt. Die Auswerteeinrichtung 40 ist zum Auswerten der reflektierten Radiowellen RW zum Erkennen mindestens eines lebendigen Tiers 100 und/oder mindestens eines lebendigen Menschen ausgebildet, insbesondere wertet aus und erkennt. Die Steuereinrichtung 45 ist zum Steuern des Grünflächenbearbeitungsroboters 1 in Abhängigkeit der Erkennung ausgebildet, insbesondere steuert.

Fig. 1 bis 4 zeigen ein erfindungsgemäßes Verfahren zum Betreiben des autonomen mobilen Grünflächenbearbeitungsroboters 1, insbesondere mittels des Grünflächenbearbeitungssystems 50. Das Verfahren weist die Schritte auf: a) Senden von den Radiowellen AW mittels des Grünflächenbearbeitungsroboters 1, insbesondere mittels der Sendeeinrichtung 30. b) Empfangen von den reflektierten Radiowellen RW mittels des Grünflächenbearbeitungsroboters 1, insbesondere mittels der Empfangseinrichtung 35. c) Auswerten der reflektierten Radiowellen RW zu dem Erkennen mindestens des lebendigen Tiers 100 und/oder mindestens des lebendigen Menschen, insbesondere mittels der Auswerteeinrichtung 40. d) Steuern des Grünflächenbearbeitungsroboters 1 in Abhängigkeit der Erkennung, insbesondere mittels der Steuereinrichtung 45.

In dem gezeigten Ausführungsbeispiel weist der Grünflächenbearbeitungsroboter 1 die Auswerteeinrichtung 40 und/oder die Steuereinrichtung 45 auf. In alternativen Ausführungsbeispielen braucht oder kann der Grünflächenbearbeitungsroboter nicht die Auswerteeinrichtung und/oder die Steuereinrichtung aufweisen.

Des Weiteren ist in dem gezeigten Ausführungsbeispiel der Grünflächenbearbeitungsroboter 1 zum autonomen Bearbeiten einer Fläche 200 ausgebildet, insbesondere bearbeitet autonom.

Im Detail ist der Grünflächenbearbeitungsroboter 1 als ein Rasenmähroboter 1`, insbesondere mit einem Rasenmähwerkzeug 20`, ausgebildet, insbesondere mäht.

Außerdem ist das Tier 100 auf der Fläche 200.

In dem gezeigten Ausführungsbeispiel ist das Tier 100 der Tierart Hund. In alternativen Ausführungsbeispielen kann das Tier einer verschiedenen Tierart sein.

Weiter weist der Schritt c) auf: Auswerten mittels Vergleichens der reflektierten Radiowellen RW mit den gesendeten Radiowellen AW, insbesondere einer Doppler-Verschiebung DV, wie in Fig. 2 gezeigt.

Zudem weisen die Radiowellen W eine Frequenz fW zum Eindringen in einen Körper 101 des Tiers 100 und/oder des Menschen, insbesondere in einem Eindring-Bereich von 500 MHz bis 6 GHz, auf, insbesondere dringen ein, wie in Fig. 1 und 4 gezeigt.

Des Weiteren weist der Schritt c) auf: Auswerten der reflektierten Radiowellen RW nach einem Herzschlagbewegungs- und/oder Atembewegungs-Kriterium HAK, wie in Fig. 3 gezeigt. Insbesondere ist das Herzschlagbewegungs- und/oder Atembewegungs-Kriterium HAK für eine Herzschlagbewegung HB und/oder eine Atembewegung AB des Tiers 100 und/oder des Menschen charakteristisch, wie in Fig. 1 gezeigt.

Außerdem ist das Herzschlag- und/oder Atembewegungs-Kriterium HAK, dass die reflektierten Radiowellen RW, insbesondere die Doppler-Verschiebung DV oder eine auf der Doppler-Verschiebung basierende Größe, eine Änderung mit einer Frequenz fDV in einem Herzschlagbewegungs- und/oder Atembewegungs-Bereich HAB, insbesondere von 10 mHz, insbesondere von 100 mHz, insbesondere von 200 mHz, bis 20 Hz, insbesondere bis 10 Hz, insbesondere bis 5 Hz, aufweisen, wie in Fig. 3 gezeigt.

Im Detail sind oder werden die Radiowellen AW von mindestens einem Teil eines schlagenden bzw. sich bewegenden Herzes und/oder einer sich bewegenden Lunge des Tiers 100 und/oder des Menschen reflektiert.

Somit weisen die reflektierten Radiowellen RW, insbesondere die Doppler-Verschiebung DV oder die auf der Doppler-Verschiebung basierende Größe, die Änderung mit der Frequenz fDV, insbesondere die Änderungen mit den jeweiligen Frequenzen fDV, in dem Herzschlagbewegungs- und/oder Atembewegungs-Bereich HAB auf.

Somit ist das Herzschlag- und/oder Atembewegungs-Kriterium HAK erfüllt.

Somit wird das lebendige Tier 100 erkannt.

Weiter weist der Schritt c) auf: Auswerten der reflektierten Radiowellen RW, insbesondere der Doppler-Verschiebung DV oder der auf der Doppler-Verschiebung basierenden Größe, unter Berücksichtigung eines Bewegens des Grünflächenbearbeitungsroboters 1 auf der zu bearbeitenden Fläche 200.

In dem gezeigten Ausführungsbeispiel weist der Schritt c) auf: Auswerten der reflektierten Radiowellen RW, insbesondere der Doppler-Verschiebung DV oder der auf der Doppler-Verschiebung basierenden Größe, unter Berücksichtigung eines Bewegens des Tiers 100 und/oder des Menschen.

Zudem weist der Schritt a) auf: Senden der Radiowellen AW mit einer Sendeleistung P von maximal 2 mW, insbesondere von maximal 1 mW.

Des Weiteren weist der Schritt c) auf: Auswerten der reflektierten Radiowellen RW, insbesondere einer Zeitverschiebung Δt zwischen dem Senden der Radiowellen AW und dem Empfangen der Radiowellen RW, zum Bestimmen, insbesondere mindestens, einer Entfernung Dla, Dlb, Die, Dld, Die zu, insbesondere mindestens, einem die gesendeten Radiowellen AW reflektierenden Objekt 110a, 110b, 110c, 110d, 110e, insbesondere dem Tier 100 und/oder dem Menschen, insbesondere mittels der Auswerteeinrichtung 40, wie in Fig. 4 gezeigt. Der Schritt d) weist auf: Steuern des Grünflächenbearbeitungsroboters 1 in Abhängigkeit der Entfernung Dla, Dlb, Die, Dld, Die, insbesondere mittels Verknüpfens mit der Erkennung, insbesondere mittels der Steuereinrichtung 45.

In dem gezeigten Ausführungsbeispiel ist das Objekt 110a das Tier 100. Zusätzlich oder alternativ sind die Objekte 110b, 110c, 110d, 110e Radiowellenreflektoren, insbesondere auf einem Begrenzungsrand der Fläche 200.

Außerdem weist das Verfahren auf: Scannen einer Umgebung 300 des Grünflächenbearbeitungsroboters 1 mittels gerichteten Sendens von gebündelten Radiowellen gAW in dem Schritt a), insbesondere mittels der Sendeeinrichtung 30, und mittels Auswertens der reflektierten Radiowellen RW zum Bestimmen, insbesondere mindestens, einer Richtung Rla, Rlb, Rlc, Rld, Rle zu, insbesondere mindestens, dem die gesendeten Radiowellen AW reflektierenden Objekt 110a, 110b, 110c, 110d, 110e, insbesondere dem Tier 100 und/oder dem Menschen, in dem Schritt c), insbesondere mittels der Auswerteeinrichtung 40. Der Schritt d) weist auf: Steuern des Grünflächenbearbeitungsroboters 1 in Abhängigkeit der Richtung RIa, RIb, Rlc, Rld, Rle, insbesondere mittels Verknüpfens mit der Erkennung und/oder der Entfernung Dla, Dlb, Die, Dld, Die, insbesondere mittels der Steuereinrichtung 45.

Im Detail weist das Verfahren auf: Bestimmen einer Position PO des Grünflächenbearbeitungsroboters 1 auf der zu bearbeitenden Fläche 200, insbesondere in Bezug auf den Begrenzungsrand 201 der Fläche 200, in Abhängigkeit der Entfernung Dla, Dlb, Die, Dld, Die und/oder der Richtung Rla, Rlb, Rlc, Rld, Rle, insbesondere mittels der Auswerteeinrichtung 40. Steuern des Bewegens des Grünflächenbearbeitungsroboters 1 auf der Fläche 200 in Abhängigkeit der bestimmten Position PO, insbesondere derart, dass der Grünflächenbearbeitungsroboter 1 auf der Fläche 200 bleibt, insbesondere innerhalb des Begrenzungsrands 201, insbesondere mittels der Steuereinrichtung 45.

Weiter weist der Grünflächenbearbeitungsroboter 1 ein Bewegungs-Antriebssystem 10, insbesondere ein Fahr-Antriebssystem 10', zu dem Bewegen des Grünflächenbearbeitungsroboters 1 auf der zu bearbeitenden Fläche 200 auf, wie in Fig. 1 gezeigt. Der Schritt d) weist auf: Steuern des Bewegungs-Antriebssystems 10 in Abhängigkeit der Erkennung, insbesondere zum Herumbewegen des Grünflächenbearbeitungsroboters 1 um das erkannte Tier 100 und/oder den erkannten Menschen herum, insbesondere mittels der Steuereinrichtung 45.

Zusätzlich oder alternativ weist der Grünflächenbearbeitungsroboter 1 ein bewegliches Bearbeitungswerkzeug 20 zum Bearbeiten der Fläche 20 und ein Werkzeug-Antriebssystem 21 zum Bewegen des Bearbeitungswerkzeugs 20 auf. Der Schritt d) weist auf: Steuern, insbesondere Deaktivieren, des Werkzeug-Antriebssystems 21 in Abhängigkeit der Erkennung, insbesondere mittels der Steuereinrichtung 45.

Im Detail ist das Bearbeitungswerkzeug 20 das Rasenmähwerkzeug 20`.

Wie die gezeigten und oben erläuterten Ausführungsbeispiele deutlich machen, stellt die Erfindung ein vorteilhaftes Verfahren zum Betreiben eines autonomen mobilen Grünflächenbearbeitungsroboters und ein vorteilhaftes Grünflächenbearbeitungssystem aufweisend einen autonomen mobilen Grünflächenbearbeitungsroboter bereit, das jeweils verbesserte Eigenschaften aufweist.

## Patentansprüche

1. Verfahren zum Betreiben eines autonomen mobilen Grünflächenbearbeitungsroboters (1), wobei das Verfahren die Schritte aufweist:
a) Senden von Radiowellen (AW) mittels des Grünflächenbearbeitungsroboters (1),
b) Empfangen von reflektierten Radiowellen (RW) mittels des Grünflächenbearbeitungsroboters (1),
c) Auswerten der reflektierten Radiowellen (RW) zum Erkennen mindestens eines lebendigen Tiers (100) und/oder mindestens eines lebendigen Menschen, und
d) Steuern des Grünflächenbearbeitungsroboters (1) in Abhängigkeit der Erkennung, **dadurch gekennzeichnet, dass**
- der Schritt c) aufweist: Auswerten der reflektierten Radiowellen (RW) unter Berücksichtigung eines Bewegens des Grünflächenbearbeitungsroboters (1) auf einer zu bearbeitenden Fläche (200).

2. Verfahren nach Anspruch 1,
- wobei der Schritt c) aufweist: Auswerten mittels Vergleichens der reflektierten Radiowellen (RW) mit den gesendeten Radiowellen (AW).

3. Verfahren nach einem der vorhergehenden Ansprüche,
- wobei die Radiowellen (W) eine Frequenz (fW) zum Eindringen in einen Körper (101) eines Tiers (100) und/oder eines Menschen, insbesondere in einem Eindring-Bereich (EB) von 500 MHz bis 6 GHz, aufweisen.

4. Verfahren nach einem der vorhergehenden Ansprüche,
- wobei der Schritt c) aufweist: Auswerten der reflektierten Radiowellen (RW) nach einem Herzschlagbewegungs- und/oder Atembewegungs-Kriterium (HAK), insbesondere wobei das Herzschlagbewegungs- und/oder Atembewegungs-Kriterium (HAK) für eine Herzschlagbewegung (HB) und/oder eine Atembewegung (AB) eines Tiers (100) und/oder eines Menschen charakteristisch ist.

5. Verfahren nach Anspruch 4, insbesondere und nach Anspruch 2,
- wobei das Herzschlag- und/oder Atembewegungs-Kriterium (HAK) ist, dass die reflektierten Radiowellen (RW), insbesondere eine Doppler-Verschiebung (DV) oder eine auf der Doppler-Verschiebung basierende Größe, eine Änderung mit einer Frequenz (fDV) in einem Herzschlagbewegungs- und/oder Atembewegungs-Bereich (HAB), insbesondere von 10 mHz, insbesondere von 100 mHz, insbesondere von 200 mHz, bis 20 Hz, insbesondere bis 10 Hz, insbesondere bis 5 Hz, aufweisen.

6. Verfahren nach Anspruch 5,
- wobei der Schritt c) aufweist: Auswerten der Doppler-Verschiebung (DV) oder der auf der Doppler-Verschiebung basierenden Größe unter Berücksichtigung des Bewegens des Grünflächenbearbeitungsroboters (1) auf der zu bearbeitenden Fläche (200).

7. Verfahren nach einem der vorhergehenden Ansprüche,
- wobei der Schritt a) aufweist: Senden der Radiowellen (AW) mit einer Sendeleistung (P) von maximal 2 mW, insbesondere von maximal 1 mW.

8. Verfahren nach einem der vorhergehenden Ansprüche, insbesondere nach Anspruch 2,
- wobei der Schritt c) aufweist: Auswerten der reflektierten Radiowellen (RW), insbesondere einer Zeitverschiebung (Δt) zwischen dem Senden der Radiowellen (AW) und dem Empfangen der Radiowellen (RW), zum Bestimmen einer Entfernung (Dla, Dlb, Die, Dld, Dle) zu einem die gesendeten Radiowellen (AW) reflektierenden Objekt (110a, 110b, 110c, 110d, 110e), insbesondere dem Tier (100) und/oder dem Menschen, und
- wobei der Schritt d) aufweist: Steuern des Grünflächenbearbeitungsroboters (1) in Abhängigkeit der Entfernung (Dla, Dlb, Die, Dld, Die), insbesondere mittels Verknüpfens mit der Erkennung.

9. Verfahren nach einem der vorhergehenden Ansprüche, insbesondere nach Anspruch 8,
- wobei das Verfahren aufweist: Scannen einer Umgebung (300) des Grünflächenbearbeitungsroboters (1) mittels gerichteten Sendens von gebündelten Radiowellen (gAW) in dem Schritt a) und mittels Auswertens der reflektierten Radiowellen (RW) zum Bestimmen einer Richtung (Ria, Rlb, Rlc, Rld Rle) zu einem die gesendeten Radiowellen (AW) reflektierenden Objekt (110a, 110b, 110c, 110d, 110e), insbesondere dem Tier (100) und/oder dem Menschen, in dem Schritt c), und
- wobei der Schritt d) aufweist: Steuern des Grünflächenbearbeitungsroboters (1) in Abhängigkeit der Richtung (Ria, Rlb, Rlc, Rld Rle), insbesondere mittels Verknüpfens mit der Erkennung und/oder der Entfernung (Dla, Dlb, Die, Dld, Die).

10. Verfahren nach Anspruch 8 und/oder Anspruch 9, wobei das Verfahren die Schritte aufweist:
- Bestimmen einer Position (PO) des Grünflächenbearbeitungsroboters (1) auf der zu bearbeitenden Fläche (200), insbesondere in Bezug auf einen Begrenzungsrand (201) der Fläche (200), in Abhängigkeit der Entfernung (DIb, DIc, DId, DIe) und/oder der Richtung (Rlb, Rlc, Rld Rle), und
- Steuern des Bewegens des Grünflächenbearbeitungsroboters (1) auf der Fläche (200) in Abhängigkeit der bestimmten Position (PO), insbesondere derart, dass der Grünflächenbearbeitungsroboter (1) auf der Fläche (200) bleibt, insbesondere innerhalb des Begrenzungsrands (201).

11. Verfahren nach einem der vorhergehenden Ansprüche,
- wobei der Grünflächenbearbeitungsroboter (1) ein Bewegungs-Antriebssystem (10), insbesondere ein Fahr-Antriebssystem (10`), zum Bewegen des Grünflächenbearbeitungsroboters (1) auf der zu bearbeitenden Fläche (200) aufweist, und wobei der Schritt d) aufweist: Steuern des Bewegungs-Antriebssystems (10) in Abhängigkeit der Erkennung, insbesondere zum Herumbewegen des Grünflächenbearbeitungsroboters (1) um das erkannte Tier (100) und/oder den erkannten Menschen herum, und/oder
- wobei der Grünflächenbearbeitungsroboter (1) ein bewegliches Bearbeitungswerkzeug (20) zum Bearbeiten der Fläche (200) und ein Werkzeug-Antriebssystem (21) zum Bewegen des Bearbeitungswerkzeugs (20) aufweist, und wobei der Schritt d) aufweist: Steuern, insbesondere Deaktivieren, des Werkzeug-Antriebssystems (21) in Abhängigkeit der Erkennung.

12. Verfahren nach einem der vorhergehenden Ansprüche,
- wobei der Grünflächenbearbeitungsroboter (1) als ein Rasenmähroboter (1'), insbesondere mit einem Rasenmähwerkzeug (20'), ausgebildet ist.

13. Grünflächenbearbeitungssystem (50), insbesondere zum Ausführen eines Verfahrens nach einem der vorhergehenden Ansprüche, wobei das Grünflächenbearbeitungssystem (50) aufweist:
- einen autonomen mobilen Grünflächenbearbeitungsroboter (1), wobei der Grünflächenbearbeitungsroboter (1) aufweist:
- eine Sendeeinrichtung (30), wobei die Sendeeinrichtung (30) zum Senden von Radiowellen (AW) ausgebildet ist,
- eine Empfangseinrichtung (35), wobei die Empfangseinrichtung (35) zum Empfangen von reflektierten Radiowellen (RW) ausgebildet ist,
- eine Auswerteeinrichtung (40), wobei die Auswerteeinrichtung (40) zum Auswerten der reflektierten Radiowellen (RW) zum Erkennen mindestens eines lebendigen Tiers (100) und/oder mindestens eines lebendigen Menschen ausgebildet ist, und
- eine Steuereinrichtung (45), wobei die Steuereinrichtung (45) zum Steuern des Grünflächenbearbeitungsroboters (1) in Abhängigkeit der Erkennung ausgebildet ist, **dadurch gekennzeichnet, dass**
- das Auswerten der reflektierten Radiowellen (RW) unter Berücksichtigung eines Bewegens des Grünflächenbearbeitungsroboters (1) auf einer zu bearbeitenden Fläche (200) ist.

## Claims

1. Method for operating an autonomous mobile green area maintenance robot (1), wherein the method has the steps of:
a) transmitting radio waves (AW) by means of the green area maintenance robot (1),
b) receiving reflected radio waves (RW) by means of the green area maintenance robot (1),
c) evaluating the reflected radio waves (RW) in order to identify at least one living animal (100) and/or at least one living person, and
d) controlling the green area maintenance robot (1) on the basis of the identification, **characterized in that**
- step c) comprises: evaluating the reflected radio waves (RW), taking into account movement of the green area maintenance robot (1) on an area (200) to be maintained.

2. Method according to Claim 1,
- wherein step c) comprises: evaluating by comparing the reflected radio waves (RW) with the transmitted radio waves (AW).

3. Method according to one of the preceding claims,
- wherein the radio waves (W) have a frequency (fW) for penetrating a body (101) of an animal (100) and/or of a person, in particular in a penetration range (EB) of 500 MHz to 6 GHz.

4. Method according to one of the preceding claims,
- wherein step c) comprises: evaluating the reflected radio waves (RW) according to a heartbeat movement and/or respiratory movement criterion (HAK), in particular wherein the heartbeat movement and/or respiratory movement criterion (HAK) is characteristic of a heartbeat movement (HB) and/or a respiratory movement (AB) of an animal (100) and/or of a person.

5. Method according to Claim 4, in particular and according to Claim 2,
- wherein the heartbeat and/or respiratory movement criterion (HAK) is that the reflected radio waves (RW), in particular a Doppler shift (DV) or a variable based on the Doppler shift, have a change at a frequency (fDV) in a heartbeat movement and/or respiratory movement range (HAB), in particular from 10 mHz, in particular from 100 mHz, in particular from 200 mHz, to 20 Hz, in particular to 10 Hz, in particular 5 to Hz.

6. Method according to Claim 5,
- wherein step c) comprises: evaluating the Doppler shift (DV) or the variable based on the Doppler shift, taking into account the movement of the green area maintenance robot (1) on the area (200) to be maintained.

7. Method according to one of the preceding claims,
- wherein step a) comprises: transmitting the radio waves (AW) with transmission power (P) of at most 2 mW, in particular at most 1 mW.

8. Method according to one of the preceding claims, in particular according to Claim 2,
- wherein step c) comprises: evaluating the reflected radio waves (RW), in particular a time shift (Δt) between the transmission of the radio waves (AW) and the reception of the radio waves (RW), in order to determine a distance (Dla, Dlb, Dlc, Did, Dle) to an object (110a, 110b, 110c, 110d, 110e) reflecting the transmitted radio waves (AW), in particular the animal (100) and/or the person, and
- wherein step d) comprises: controlling the green area maintenance robot (1) on the basis of the distance (Dla, Dlb, Dlc, Did, Dle), in particular by linking it to the identification.

9. Method according to one of the preceding claims, in particular according to Claim 8,
- wherein the method comprises: scanning an environment (300) of the green area maintenance robot (1) by means of the directional transmission of focused radio waves (gAW) in step a) and by evaluating the reflected radio waves (RW) in order to determine a direction (Rla, Rib, Rlc, Rld Rle) to an object (110a, 110b, 110c, 110d, 110e) reflecting the transmitted radio waves (AW), in particular the animal (100) and/or the person, in step c), and
- wherein step d) comprises: controlling the green area maintenance robot (1) on the basis of the direction (Rla, Rib, Rlc, Rld Rle), in particular by linking it to the identification and/or the distance (Dla, Dlb, Dlc, Did, Dle).

10. Method according to Claim 8 and/or Claim 9, wherein the method has the steps of:
- determining a position (PO) of the green area maintenance robot (1) on the area (200) to be maintained, in particular with respect to a boundary edge (201) of the area (200), on the basis of the distance (Dlb, Dlc, Did, Dle) and/or the direction (Rlb, Rlc, Rld Rle), and
- controlling the movement of the green area maintenance robot (1) on the area (200) on the basis of the determined position (PO), in particular in such a manner that the green area maintenance robot (1) remains on the area (200), in particular within the boundary edge (201) .

11. Method according to one of the preceding claims,
- wherein the green area maintenance robot (1) has a movement drive system (10), in particular a traction drive system (10'), for moving the green area maintenance robot (1) on the area (200) to be maintained, and wherein step d) comprises: controlling the movement drive system (10) on the basis of the identification, in particular in order to move the green area maintenance robot (1) around the identified animal (100) and/or the identified person, and/or
- wherein the green area maintenance robot (1) has a movable maintenance tool (200) for maintaining the area (200) and a tool drive system (21) for moving the maintenance tool (20), and wherein step d) comprises: controlling, in particular deactivating, the tool drive system (21) on the basis of the identification.

12. Method according to one of the preceding claims,
- wherein the green area maintenance robot (1) is in the form of a robotic lawnmower (1), in particular with a lawnmowing tool (20').

13. Green area maintenance system (50), in particular for carrying out a method according to one of the preceding claims, wherein the green area maintenance system (50) has:
- an autonomous mobile green area maintenance robot (1), wherein the green area maintenance robot (1) has:
- a transmitting device (30), wherein the transmitting device (30) is designed to transmit radio waves (AW),
- a receiving device (35), wherein the receiving device (35) is designed to receive reflected radio waves (RW),
- an evaluation device (40), wherein the evaluation device (40) is designed to evaluate the reflected radio waves (RW) in order to identify at least one living animal (100) and/or at least one living person, and
- a control device (45), wherein the control device (45) is designed to control the green area maintenance robot (1) on the basis of the identification, **characterized in that**
- the evaluation of the reflected radio waves (RW) takes into account movement of the green area maintenance robot (1) on an area (200) to be maintained.

## Revendications

1. Procédé de fonctionnement d'un robot mobile autonome de traitement des espaces verts (1), le procédé comprenant les étapes suivantes :
a) émission d'ondes radio (AW) au moyen du robot de traitement des espaces verts (1),
b) réception d'ondes radio réfléchies (RW) au moyen du robot de traitement des espaces verts (1),
c) interprétation des ondes radio réfléchies (RW) en vue de reconnaître au moins un animal vivant (100) et/ou au moins un être humain vivant, et
d) commande du robot de traitement des espaces verts (1) en fonction de la reconnaissance, **caractérisé en ce que**
- l'étape c) comprend : interprétation des ondes radio réfléchies (RW) en tenant compte d'un mouvement du robot de traitement des espaces verts (1) sur une surface à traiter (200).

2. Procédé selon la revendication 1,
- l'étape c) comprenant : interprétation au moyen de la comparaison des ondes radio réfléchies (RW) avec les ondes radio émises (AW).

3. Procédé selon l'une des revendications précédentes,
- les ondes radio (W) possédant une fréquence (fW) destinée à pénétrer dans un corps (101) d'un animal (100) et/ou d'un être humain, notamment dans une plage de pénétration (EB) de 500 MHz à 6 GHz.

4. Procédé selon l'une des revendications précédentes,
- l'étape c) comprenant : interprétation des ondes radio réfléchies (RW) selon un critère de mouvement de battement cardiaque et/ou de mouvement respiratoire (HAK), notamment le critère de mouvement de battement cardiaque et/ou de mouvement respiratoire (HAK) étant caractéristique d'un mouvement de battement cardiaque (HB) et/ou d'un mouvement respiratoire (AB) d'un animal (100) et/ou d'un être humain.

5. Procédé selon la revendication 4, notamment et selon la revendication 2,
- le critère de battement cardiaque et/ou de mouvement respiratoire (HAK) étant que les ondes radio réfléchies (RW), notamment un décalage Doppler (DV) ou une grandeur basée sur le décalage Doppler, présentent une variation avec une fréquence (fDV) dans une plage de mouvement de battement cardiaque et/ou de mouvement respiratoire (HAB), notamment de 10 mHz, notamment de 100 mHz, notamment de 200 mHz, à 20 Hz, notamment à 10 Hz, notamment à 5 Hz.

6. Procédé selon la revendication 5,
- l'étape c) comprenant : interprétation du décalage Doppler (DV) ou de la grandeur basée sur le décalage Doppler en tenant compte du mouvement du robot de traitement des espaces verts (1) sur la surface à traiter (200) .

7. Procédé selon l'une des revendications précédentes,
- l'étape a) comprenant : émission des ondes radio (AW) avec une puissance d'émission (P) maximale de 2 mW, notamment maximale de 1 mW.

8. Procédé selon l'une des revendications précédentes, notamment selon la revendication 2,
- l'étape c) comprenant : interprétation des ondes radio réfléchies (RW), notamment d'un décalage temporel (Δt) entre l'émission des ondes radio (AW) et la réception des ondes radio (RW), en vue de déterminer une distance (DIa, DIb, DIc, DId, DIe) par rapport à un objet (110a, 110b, 110c, 110d, 110e) qui réfléchit les ondes radio émises (AW), notamment l'animal (100) et/ou l'être humain, et
- l'étape d) comprenant : commande du robot de traitement des espaces verts (1) en fonction de la distance (DIa, DIb, DIc, DId, DIe), notamment au moyen d'une combinaison avec la reconnaissance.

9. Procédé selon l'une des revendications précédentes, notamment selon la revendication 8,
- le procédé comprenant : balayage d'un environnement (300) du robot de traitement des espaces verts (1) au moyen d'une émission dirigée d'ondes radio en paquets (gAW) dans l'étape a) et au moyen de l'interprétation des ondes radio réfléchies (RW) en vue de déterminer une direction (RIa, RIb, RIc, RId, RIe) vers un objet (110a, 110b, 110c, 110d, 110e) réfléchissant les ondes radio émises (AW), notamment l'animal (100) et/ou l'être humain, dans l'étape c), et
- l'étape d) comprenant : commande du robot de traitement des espaces verts (1) en fonction de la direction (RIa, RIb, RIc, RId, RIe), notamment au moyen d'une combinaison avec la reconnaissance et/ou la distance (DIa, DIb, DIc, DId, DIe).

10. Procédé selon la revendication 8 et/ou la revendication 9, le procédé comprenant les étapes suivantes :
- détermination d'une position (PO) du robot de traitement des espaces verts (1) sur la surface (200) à traiter, notamment en référence à un bord de délimitation (201) de la surface (200), en fonction de la distance (DIb, DIc, DId, DIe) et/ou de la direction (RIb, RIc, RId, RIe), et
- commande du mouvement du robot de traitement des espaces verts (1) sur la surface (200) en fonction de la position (PO) déterminée, notamment de telle sorte que le robot de traitement des espaces verts (1) reste sur la surface (200), notamment à l'intérieur du bord de délimitation (201).

11. Procédé selon l'une des revendications précédentes,
- le robot de traitement des espaces verts (1) possédant un système d'entraînement en mouvement (10), notamment un système d'entraînement en déplacement (10'), destiné à déplacer le robot de traitement des espaces verts (1) sur la surface (200) à traiter, et l'étape d) comprenant : commande du système d'entraînement en mouvement (10) en fonction de la reconnaissance, notamment en vue faire effectuer au robot de traitement des espaces verts (1) un mouvement autour de l'animal (100) et/ou de l'être humain reconnu, et/ou
- le robot de traitement des espaces verts (1) comprenant un outil de traitement mobile (20) destiné à traiter la surface (200) et un système d'entraînement d'outil (21) destiné à mouvoir l'outil de traitement (20), l'étape d) comprenant : commande, notamment désactivation, du système d'entraînement d'outil (21) en fonction de la reconnaissance.

12. Procédé selon l'une des revendications précédentes,
- le robot de traitement des espaces verts (1) étant réalisé sous la forme d'un robot tondeur (1'), notamment avec un outil de tonte de gazon (20').

13. Système de traitement des espaces verts (50), notamment destiné à la mise en œuvre d'un procédé selon l'une des revendications précédentes, ledit système de traitement des espaces verts (50) comprenant :
- un robot mobile autonome de traitement des espaces verts (1), le robot de traitement des espaces verts (1) comprenant
- un dispositif d'émission (30), le dispositif d'émission (30) étant configuré pour émettre des ondes radio (AW),
- un dispositif de réception (35), le dispositif de réception (35) étant configuré pour recevoir des ondes radio réfléchies (RW),
- un dispositif d'interprétation (40), le dispositif d'interprétation (40) étant configuré pour interpréter les ondes radio réfléchies (RW) en vue de reconnaître au moins un animal vivant (100) et/ou au moins un être humain vivant, et
- un dispositif de commande (45), le dispositif de commande (45) étant configuré pour commander le robot de traitement des espaces verts (1) en fonction de la reconnaissance, **caractérisé en ce que**
- l'interprétation des ondes radio réfléchies (RW) est en tenant compte d'un mouvement du robot de traitement des espaces verts (1) sur une surface à traiter (200).
